(19) Europäisches Patentamt
European Patent Office
Office européen des brevets

(11) Publication number: **0 406 349 B1**

(12) **EUROPEAN PATENT SPECIFICATION**

(45) Date of publication of patent specification: **21.12.94**

(51) Int. Cl.$^5$: **C08K 5/58**

(21) Application number: **89912182.6**

(22) Date of filing: **06.10.89**

(86) International application number:
**PCT/US89/04461**

(87) International publication number:
**WO 90/03999 (19.04.90 90/09)**

(54) **IMPROVED STABILIZERS FOR HALOGEN-CONTAINING POLYMERS.**

(30) Priority: **07.10.88 US 256003**

(43) Date of publication of application:
**09.01.91 Bulletin 91/02**

(45) Publication of the grant of the patent:
**21.12.94 Bulletin 94/51**

(84) Designated Contracting States:
**AT BE CH DE FR GB IT LI LU NL SE**

(56) References cited:
**EP-A- 128 537**
**US-A- 2 160 061**
**US-A- 2 218 645**
**US-A- 2 507 142**
**US-A- 2 597 987**
**US-A- 2 868 765**
**US-A- 3 919 168**
**US-A- 4 345 040**
**US-A- 4 374 205**

(73) Proprietor: **ATOCHEM NORTH AMERICA, INC.**
**Three Parkway**
**Philadelphia,**
**Pennsylvania 19102 (US)**

(72) Inventor: **SILBERMANN, Joseph**
**15 Southern Slope Drive**
**Millburn, NJ 07041 (US)**
Inventor: **SMITH, William, L.**
**16 Meadowview Road**
**Basking Ridge, NJ 07920 (US)**

(74) Representative: **Stoner, Gerard Patrick et al**
**MEWBURN ELLIS**
**York House**
**23 Kingsway**
**London WC2B 6HP (GB)**

**EP 0 406 349 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

Many halogen-containing polymers and copolymers are thermoplastic in nature, and, therefore, require heating in order to soften them during fabrication operations, such as molding, calendering, or extruding. The heat with which these polymers are processed is usually in the range of 190 °C, or even higher, and is limited in degree and duration by the tendency of such polymers to deteriorate and decompose. Decomposition of the polymers leads to deterioration of the resultant physical properties of the resin compositions produced therefrom. In addition, a severe darkening in the color of the resin can result, thus prohibiting its use in lightly colored or transparent articles.

This deterioration and decomposition is a major drawback to the use of polyvinyl chloride resins in many applications. In order to overcome this drawback, many products have been proposed as stabilizers for halogen-containing vinyl polymers. Among the products found useful as stabilizers are metal-containing compounds such as metal soaps, organometallic compounds, and even inorganic metal compounds.

Some prior stabilizing systems have not been able to fully prevent the deterioration of resins or polymers, including polyvinyl chloride, during the period when the resins and stabilizer compositions undergo heating during processing. During this period, which may be from 5 to 30 minutes or longer, various ingredients, including, for example, pigments, plasticizers, stabilizers, and lubricants, may be mixed with the resin, and the mixture subjected to the influence of heat and pressure to form a substantially homogeneous mixture. If the resin is found to deteriorate during this period of severe heating, then the heating period has to be shortened or the temperature lowered to prevent such deterioration.

In injection-molding processes, heated resin melt compositions are injected into molds. In general, viscosity of the resin composition drops as temperature increases, and it is, therefore, possible to reduce the cycle times of injection-molding processes by increasing the temperature of the resin composition. Thus, it would be useful to be able to raise the processing temperatures of injection molding and other fabrication processes.

Organotin compounds, particularly those having tin bonded to sulfur, such as those which contain a mercapto group, have been found to be an extremely effective type of stabilizer for halogen-containing polymers, such as vinyl chloride polymers. Tin stabilizer compounds perform the function of reducing decomposition of the polymer during the processing procedure. The stabilizer allows the polymer itself, or a resin containing the polymer, to be molded, calendered or extruded with a minimum of discoloration or deterioration.

A major disadvantage of the use of any of the above-identified organotin stabilizer compositions is that they are relatively expensive. A reduction of the amount of tin stabilizer used in a polymer composition would be economically beneficial, and could represent a significant cost savings to the user. Therefore, it would be desirable to replace at least a portion of the tin present in a given resin formulation with a less expensive material without incurring any significant decrease in heat stability. In addition, it would be desirable to enhance the stabilizing properties of less-efficient organotin or other stabilizing compounds by addition of inexpensive synergistic co-stabilizing compounds. It is also desirable to obtain longer process times at elevated temperatures, and to be able to process resin formulations at higher temperatures.

The use of phosphate materials as a primary stabilizer for vinyl polymers was disclosed in U.S. Pat. No. 2,218,645, issued to A. Japs. This patent teaches that certain phosphate or borate salts, particularly trisodium phosphate or lead borate, can be used to stabilize vinyl polymers. The resultant compositions are claimed to exhibit some color improvement.

U.S. Pat. No. 2,868,765, issued to Haefner et al., relates to the use of a small amount of a phosphate in a water-based vinyl chloride polymerization mixture. The phosphate is added to the aqueous solution before polymerization occurs, and most of the phosphate is removed by water washing after polymerization is complete. The thus-treated polymer is then combined with other heat-stabilizing compounds.

U.S. Pat. Nos. 4,345,040 and 4,374,205, both issued to D. Hall, relate to using of an aqueous solution containing a metal salt of phosphoric acid in the treatment of a porous post-chlorinated vinyl chloride polymer. This aqueous treatment of porous polymers requires that the polymer be porous enough to absorb the phosphate, which must be in a water solution.

### SUMMARY OF THE INVENTION

The present invention provides a stabilizer composition for enhancing the long-term melt stability of halogen-containing thermoplastic compositions, the stabilizer composition comprising a mixture of:

a) one or more metal-containing primary stabilizer compounds; and

b) a finely divided co-stabilizing phosphate material comprising an anhydrous sodium or potassium monohydrogen phosphate, lithium dihydrogen phosphate, or alkali-metal pyrophosphate, the finely divided phosphate material being characterized by a B.E.T.-measured specific surface area (S.A.) of at least about 0.5 square meters per gram ($m^2/g$).

The invention also includes heat-stabilized compositions comprising halogen-containing thermoplastic polymers combined with the stabilizers of the present invention. In addition, the invention provides a process for heat-stabilizing such halogen-containing thermoplastic polymers by the addition of the stabilizers of the present invention.

The stabilizers of this invention extend the viscosity stability of halogen-containing resins, such as polyvinyl chloride, at elevated temperatures, while delaying for as long as possible the development of discoloration.

Furthermore, the use of a finely divided phosphate co-stabilizer in accordance with this invention can reduce the amount of costly primary organometallic stabilizer required to achieve a given degree of heat stabilization. Additionally, the phosphate co-stabilizer can improve the performance of less-efficient metal-containing stabilizer compounds and thereby extend the long-term stability of the polyvinyl chloride polymer resin.

A preferred halogen-containing resin which exhibits superior melt stabilization is polyvinyl chloride, although also contemplated are other polyvinyl halide polymers, copolymers with vinyl acetate, vinylidene chloride, styrene dialkyl fumarate or maleate, or other alkyl esters of mono-olefinic acids, as well as blends and alloys of vinyl halide polymers with other thermoplastic resins. The polyvinyl halide polymer used is ordinarily and preferably the chloride, although others such as the bromide or fluoride may be used. Also included are chlorinated polyvinyl chloride and halogenated polyolefins.

In general, the vinyl halide polymer compositions that can be stabilized according to this invention will be homopolymers of vinyl halide monomers, copolymers of vinyl halide monomers with other monomers and including both block and graft copolymers, and alloys, blends and mixtures of vinyl halide monomers with other polymers. The vinyl halide polymers can be compounded for extrusion, injection molding and blow molding, and can be formed into such finished articles as fibers, siding, window profiles, films, pipe, elbows and other pipe couplings, and bottles. The vinyl halide polymers can be mixed with other ingredients such as dyes, pigments, flameproofing agents, lubricants, impact modifiers and processing aids, and with other additives to prevent, reduce or mask discoloration or deterioration caused by heating, aging, exposure to light or weathering.

The thermoplastic composition of the invention comprises one or more halogen-containing polymers, and, as a primary stabilizer, a metal-containing compound such as a metal soap, an organometallic compound, or derivatives or mixtures thereof. To this composition is added a finely-divided powdered form of an alkali-metal phosphate selected from the group including sodium monohydrogen phosphate (also known as disodium phosphate or DSP), potassium monohydrogen phosphate, lithium dihydrogen phosphate, and alkali-metal pyrophosphates. A preferred phosphate for use in this invention is anhydrous DSP. The addition of the finely divided phosphate improves the long-term heat stability of the resultant vinyl resin composition.

To be "finely divided" in accordance with the present invention, the phosphate material is characterized by a specific surface area of at least about 0.5 $m^2/g$, as interpreted using the well-known B.E.T. theory, discussed further below. Particularly enhanced improvements in performance are seen when the phosphate material has a B.E.T.-measured surface area greater than about 1.1 $m^2/g$, particularly when using anhydrous DSP.

The B.E.T. method for the determination of effective surface area of a powdered solid is a measure of the quantity of gas that adsorbs as a monomolecular layer on the sample. (See Perry and Chilton, Chemical Engineers' Handbook, Fifth Ed., p. 8-7 (1973).) The B.E.T. theory was set forth by Brunauer, Emmett, and Teller, J. Am. Chem. Soc., Vol. 60, 309 (1938). If the quantity of gas required to cover a powder with a complete monolayer of gas molecules is measured, then the surface area can be calculated using the cross-sectional area of the gas molecules. The surface area measured by gas-adsorption techniques is directly related to the surface area available in chemical reactions. This adsorption is carried out at or near the boiling point of the adsorbate. The solid should be completely desorbed of any volatile material prior to the test. All measurements of surface area for the examples of the present specification were made on a Micromeritics Flowsorb II 2300 instrument using a single point determination technique with nitrogen gas as the adsorbate. The accuracy of such measurements is about ± 3%.

## DETAILED DESCRIPTION OF THE INVENTION

The present invention provides a stabilizer composition for enhancing the long-term melt stability of halogen-containing thermoplastic compositions, the stabilizer composition comprising a mixture of:

a) one or more metal-containing primary stabilizer compounds; and

b) finely divided co-stabilizing phosphate material comprising an anhydrous sodium or potassium monohydrogen phosphate, lithium dihydrogen phosphate, or alkali-metal pyrophosphate. The finely divided phosphate material is characterized by a B.E.T.-measured specific surface area of at least about 0.5 $m^2/g$, preferably at least about 1.1 $m^2/g$.

The metal-containing stabilizer component can be a single compound or can be a combination of compounds. The metal-containing stabilizer component will generally be present in an amount of about 0.1 to 8 parts per hundred parts of polymer resin (PHR). The tin stabilizers are preferably provided at 0.1 to 3 PHR; while lead stabilizers are typically used in greater amounts, as high as 2 to 5 PHR.

The stabilizing compositions of this invention preferably comprise about 5 to 95 percent primary stabilizer, and about 5 to 95 percent phosphate co-stabilizer. The stabilizing compositions are preferably employed in concentrations of between 0.1 and 10 PHR.

The metal-containing primary stabilizer and phosphate co-stabilizer can be mixed together to form the stabilizing composition, or can be added individually to the polymer compositions. When pre-mixed, the stabilizer composition is preferably in the form of a free-flowing powder. When added individually, the finely divided phosphate is preferably in the form of free-flowing powder, but the primary stabilizer can be in solid or liquid form.

The invention also includes heat-stabilized compositions comprising halogen-containing thermoplastic polymers combined with the stabilizers of the present invention. In addition, the invention provides a process for stabilizing halogen-containing thermoplastic polymers against the effects of heat by the addition of the stabilizers of the present invention.

### Suitable Polymer Substrates

In general, the stabilizers are used with vinyl halide polymers, a term that includes vinyl halide homopolymers, vinyl halide copolymers and polymer blends containing said homopolymers or copolymers. As vinyl halide homopolymers, vinyl halide copolymers and polymer blends containing vinyl halide homopolymers or vinyl halide copolymers usable in the practice of this invention there may be used, for example,

(1) polyvinyl chloride, post-chlorinated polyvinyl chloride and other post-halogenated polymers, polyvinylidene chloride, polyvinyl bromide, polyvinyl fluoride, polyvinylidene fluoride;

(2) copolymers of vinyl chloride with a copolymerizable ethylenically unsaturated monomer such as vinylidene chloride, vinyl acetate, vinyl butyrate, vinyl benzoate, diethyl fumarate, diethyl maleate, other alkyl fumarates and maleates, vinyl propionate, methyl acrylate, 2-ethyl-hexyl acrylate, butyl acrylate, ethyl acrylate and other alkyl acrylates, methyl methacrylate, ethyl methacrylate, butyl methacrylates, hydroxy-ethyl methacrylate and other alkyl methacrylates, methyl alpha chloroacrylate, styrene, vinyl ethers such as vinyl ethyl ether, vinyl chloroethyl ether, vinyl phenyl ether, vinyl ketones such as vinyl methyl ketone, vinyl phenyl ketone, 1-fluoro-1-chloro-ethylene, acrylonitrile, chloroacrylonitrile, allylidene diacetate, chloroallylidene diacetate, ethylene and propylene; and

(3) polymer blends such as blends of:
polyvinyl chloride and polyethylene,
polyvinyl chloride and polymethyl methacrylate,
polyvinyl chloride and polybutylmethacrylate,
polyvinyl chloride and polystyrene,
polyvinyl chloride and acrylonitrile-butadiene-styrene copolymer, and
polyvinyl chloride and polymethyl methacrylate.

Typical vinyl halide copolymers usable in this invention include:
vinyl chloride-vinyl acetate,
vinyl chloride-vinylidene chloride,
vinyl chloride-diethylfumarate,
vinyl chloride-trichloroethylene, and
vinyl chloride-2-ethyl-hexyl acrylate.

The polymer blends usable in the practice of this invention comprise physical blends of at least two distinct polymeric species and contain from 25 to 95 weight percent of vinyl halide homopolymer or vinyl

halide copolymer. The vinyl halide copolymers usable in the practice of this invention are copolymers comprising from 25 to 95 mole percent vinyl halide units.

The benefits of this invention apply to both rigid and flexible halogen-containing polymers.

## The Metal-Containing Primary Stabilizer

The metal-containing primary stabilizer compounds useful within the scope of the present invention include the well-known, widely described compounds and mixtures of compounds used as stabilizers for polyvinyl chloride. These primary stabilizers can be selected from metal-containing compounds where the metal is lithium, sodium, potassium, magnesium, calcium, zinc, strontium, cadmium, barium, manganese, iron, cobalt, titanium, aluminum, tin, lead, bismuth or antimony, or a mixture of any two or more such metal-containing compounds. The use of many of these metal-containing compounds as PVC stabilizers is described in British Patent Specification 1,001,344 and an article by Robert G. Weiler, "Uncommon Metals as Heat Stabilizers for Flexible Vinyl", pages 534-537, Volume 28, Technical Papers, Society of Plastics Engineers, Inc., 1982, the teachings of which are incorporated herein by reference.

The use of sulfur-containing antimony compounds as stabilizers for vinyl halide polymers is disclosed in U.S. Patent 4,029,618; that disclosure is incorporated herein by reference.

The organotin compounds represent an especially well-known and widely used class of tin-containing stabilizers for vinyl halide polymers. Included within the class of useful organotin compounds are those containing one or more tetravalent tin atoms which each have at least one direct tin-to-carbon bond. Such compounds are described in the numerous U.S. patents and other references.

Another important and widely used class of tin-containing stabilizers are compounds containing one or more tetravalent tin atoms which each have at least one direct tin-to-sulfur or tin-to-oxygen bond, that is, which contain a group:

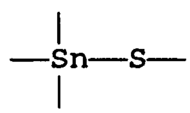 or 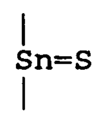

or

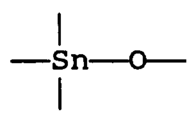 or 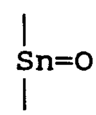

Examples of such compounds with tin-to-sulfur bonds are described in U.S. Pat. No. 3,764,571, issued to Jennings, and examples of compounds with tin-to-oxygen bonds are described in U.S. Pat. No. 3,167,527, to Hechenbleikner et al.

Tin compounds can be used alone or in combination, in the form of mixtures that react in situ, as described in U.S. Patent 3,674,737 to Brecker, in the form of mixtures as described in U.S. Patent 4,255,320 to Brecker and as blends as described in U.S. Patent 4,576,984 to Bresser et al.

In addition, the tin compounds, mixtures, blends and the like referred to above can be used in combination with an organotin halide as disclosed by Larkin in U.S. Patent 3,715,333.

The metal-containing stabilizers useful herein are well known for their ability to prevent formation of, or react with and neutralize, the hydrogen halide evolved when vinyl halide polymers are heated to processing temperatures. The progressive elimination of hydrogen halide from the polymerization chain ("unzipping") yields a polyene chain which is believed to be at least partially responsible for the change in viscosity and color that occurs during heating of the polymer.

As indicated, these conventional, well-known metal-containing heat stabilizers for vinyl halide polymers include compounds of the elements of groups IIA and IIB of the Periodic Table of the Elements, as well as compounds of tin, lead, bismuth and antimony. Conventional well-known heat stabilizers for vinyl chloride polymers are also discussed in Chapter 9 of The Encyclopedia of PVC, edited by L. I. Nass (M. Dekker, New York, 1976), incorporated herein by reference.

One class of metal compounds that is particularly effective are the organotin compounds. Organotin compounds are those containing one or more tetravalent tin atoms, each of which has at least one direct tin-to-carbon bond, and wherein the remaining valences of the tin atom are satisfied by bonds to halogen, oxygen, or sulfur. Examples include bonds to residues resulting from:

1) the removal of the hydrogen atom from the oxygen atom of a carboxylic acid, the monoester of a dicarboxylic acid, an alcohol, or a polyol; or

2) the removal of the hydrogen atom from the sulfur atom of a mercaptan, mercaptoacid, mercaptoalcohol, mercaptoacid ester or mercaptoalcohol ester.

The well-known members of this class are those containing one or more tetravalent tin atoms which each has at least one direct tin-to-sulfur or tin-to-oxygen bond and include the organotin oxides, sulfides, alkoxides, carboxylates, mercaptides, derivatives of mercaptoacids, derivatives of mercaptoalcohols and the mercaptoacid and mercaptoalcohol esters. They can be represented by the following formulae:

$(R^4SnZ_{1.5})_x$
$(R^4)_2SnZ$
$(R^4)_aSn(OOCR^5)_{4-a}$
$(R^4)_aSn(SR^6)_{4-a}$
$[R^4SnSR^6]_2(Z'_b)_2$
$[(R^4)_2SnSR^6]_2Z'_b$
$[(R^4)_aSn)_2(OOCR^5COO)_{4-a}$
$[(R^4)_aSn]_2(ZR^9Z)_{4-a}$
$[(R^4)_aSn]_2(ZR^9COO)_{4-a}$

where

a is 1 or 2;
x is an integer from 3 to 20, inclusive;
Z is oxygen and/or sulfur;
Z' is oxygen and/or sulfur;
b is an integer from 1 to 4 when Z' is sulfur and is 1 when Z' is oxygen;
$R^4$, $R^5$ and $R^6$ each independently is substituted or unsubstituted hydrocarbyl, and $R^6$ additionally can be $-R^7-COOR^8$ or $-R^9-OOCR^8$, (where $R^7$ is $C_1$-$C_{20}$ alkylene), or $R^6$ can be H;
$R^8$ is hydrocarbyl; and
$R^9$ is $C_2$-$C_{20}$ alkylene.

In one embodiment, the metal-containing compound is the reaction product of a mono-organotin trihalide, a diorganotin dihalide, or mixture thereof, with an alkali-metal sulfide and one or more of a monocarboxylic acid, a polycarboxylic acid, a mercaptan, a mercaptoacid, a mercaptoalcohol, a mercaptoacid ester or a mercaptoalcohol ester.

Representative tin compounds that are used include
dibutyltin maleate
dibutyltin di(stearyl maleate)
monobutyltin (isooctylmercaptoacetate)sulfide
monobutyltin (dodecylmercaptide)sulfide
monobutyltin (mercaptoethyloleate)sulfide
monobutyltin trimercaptoethyloleate
monobutyltin tri(hydroxyethylmercaptide)sulfide
monobutyltin (mercaptoethyloleate)sulfide
and sulfur-bridged compounds of formula

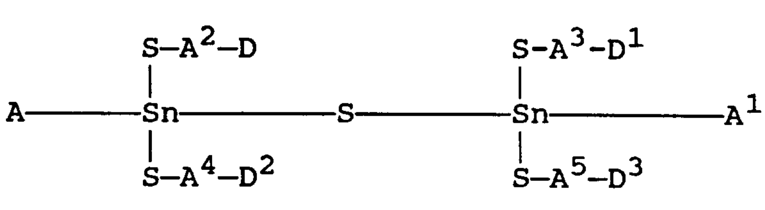

where:

A and $A^1$ are alkyl of 1 to 12 carbon atoms, such as methyl, butyl and octyl;
$A^2$, $A^3$, $A^4$ and $A^5$ are lower alkylene, such as ethylene; and
D, $D^1$, $D^2$ and $D^3$ each, independently, is OH,

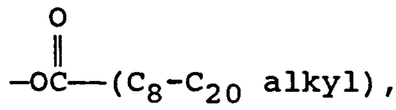

($C_6$-$C_{18}$) alkyl, or

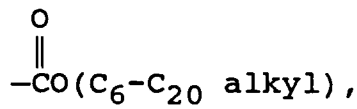

or

D and $D^1$, or $D^2$ and $D^3$ together can form the group:

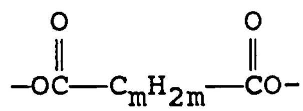

where m is a number from 1 to 8.

Excellent results in stabilizing vinyl halide resins are obtained when stabilizers other than those based on tin are used. Systems such as those derived from alkali metal (sodium, potassium), alkaline-earth metals (magnesium, calcium, barium) and other metals, such as zinc, stannous tin, lead, antimony or their mixtures or with various other additives are particularly suitable. These additives can be, in particular, the betadiketones, epoxides, such as, for example, epoxidized soya oil, phosphites, phosphonates, triphenyl phosphites and antioxidants such as tert-butyl catechol and others. Thus, there can be used barium, strontium, calcium, cadmium, zinc, lead, tin, magnesium, cobalt, nickel, titanium and aluminum salts of phenols, aromatic carboxylic acids, fatty acids or epoxy fatty acids.

Examples of suitable salts include barium di(nonylphenolate), strontium di(nonylphenolate), strontium di-(amylphenolate), barium di(octylphenolate), strontium di(octylphenolate), barium di(nonyl-o-cresolate), lead di(octylphenolate), cadmium-2-ethylhexoate, cadmium laurate, cadmium stearate, zinc caprylate, cadmium caprate, barium stearate, barium-2-ethylhexoate, barium laurate, barium ricinoleate, lead stearate, aluminum stearate, magnesium stearate, calcium octoate, calcium stearate, cadmium naphthenate, cadmium benzoate, cadmium p-tert-butylbenzoate, barium octyl salicylate, cadmium epoxy stearate, strontium epoxy stearate, cadmium salt of epoxidized acids of soybean oil, and lead epoxy stearate.

The metal-containing compound can be the barium, calcium, lead, magnesium, potassium, tin (including $Sn^{++}$) or zinc salt of a carboxylic acid, a phenol, sulfuric acid or phosphoric acid. When using alkali or alkaline-earth metals and/or zinc, the metal derivatives which are particularly suitable are the carboxylates. Reference can be made in a non-limitative matter to the laurate, stearate, benzoate, caproate, caprylate, 2-ethylhexoate, naphthenate, neoalkanoate and oleate. However, a certain number of derivatives such as the carbonate, oxide and sulfate can also be advantageously used.

When antimony is chosen as the metal, useful results are obtained when the mercapto esters are employed in conjunction with antimony trimercaptides, these trimercaptides being derived desirably from aliphatic mercaptans, esters of mercaptoacids or esters of mercaptoalcohols.

## The Alkali-Metal Phosphate Compound

The finely divided alkali-metal phosphate material used in the present invention comprises one or more of an anhydrous sodium or potassium monohydrogen phosphate, lithium dihydrogen phosphate, or alkali-metal pyrophosphate with sodium monohydrogen phosphate (DSP), particularly in anhydrous form, being preferred. The finely divided phosphate material in accordance with the present invention is characterized by a B.E.T.-measured specific surface area above about 0.5 $m^2/g$, preferably above about 1.1 $m^2/g$. The preferred DSP materials not only provide excellent co-stabilization, but are also readily available at relatively low cost.

More particularly, a suitable form of DSP is anhydrous $Na_2HPO_4$. Another group of alkali-metal phosphates are dipotassium monohydrogen phosphate ($K_2HPO_4$) and lithium dihydrogen phosphate ($LiH_2PO_4$). Each acts as a co-stabilizer when added to a selected metal-containing stabilizer. The alkali-metal pyrophosphates, such as $Na_4P_2O_7$,$Na_4P_2O_7 \cdot 10H_2O$, or $K_4P_2O_7$, also exhibit synergistic qualities when added to metal-containing stabilizers.

The addition of one or more of these alkali-metal hydrogen phosphate salts or alkali-metal pyrophosphate salts to one or more of the metal-containing primary stabilizer compounds considerably improves the degree of stabilization imparted to the vinyl halide polymers. In addition, if desired, the phosphate compounds can replace a portion of the primary metal-containing stabilizer compounds without significantly decreasing the degree of long-term heat stability imparted to the vinyl halide polymer. In fact, the resultant combination of the two major constituents produces a stabilizer which displays improved effectiveness and greater stabilization than the primary metal-containing stabilizer compound itself. It is, therefore, possible to significantly reduce the concentration of metal-containing stabilizers (for example, tin compounds) required to impart a given degree of stabilization utilizing a phosphate as described.

The use of the phosphate co-stabilizer can even provide a significant improvement in the overall stabilization. For example, the present invention allows a reduction in the amount of tin mercaptide heat stabilizer added to a polymer melt, and this reduction in the level of tin mercaptide results in a product having improved resistance to weathering.

Addition of various amounts of the finely divided phosphate co-stabilizers of the present invention to normal amounts of less-effective tin stabilizer compounds, provides even longer term stability for various fabrication processes. Such additional amounts of co-stabilizers provide extended melt viscosity times of thermal stability for the halogen-containing polymers.

The alkali-metal phosphate co-stabilizers of the present invention provide improved melt viscosity stability for halogen-containing polymers. This improvement means that halide polymer compositions can be held at elevated temperatures for a longer periods of time than were previously possible. It also means that the compositions can be subjected to higher processing temperatures than were previously possible. Since the viscosity of a thermoplastic composition decreases as temperature is increased, higher melt temperatures allow faster processing and cycle times. Thus, the present invention provides greater productivity in injection-molding and extrusion processes.

The present invention also provides significant economies in connection with recycling scrap generated in thermoplastics fabrication operation. Because scrap, e.g., runners and defective parts, has been exposed to elevated temperatures, there are limits respecting the amount of reground scrap that can be combined with virgin material; this figure is normally no greater than 20%. Because of the greater resistance to thermally-induced deterioration provided to halogen-containing resins by the alkali-metal phosphate salts described herein, the amount of recycled material can be 100%, i.e., defective parts, runners, flashing and the like can be reground and totally recycled for extrusion and injection molding.

Also contemplated is the use of alkaline-earth metal phosphate salts and their pyrophosphate analogs. These compounds such as $Ca(H_2PO_4)_2$, $CaP_2O_7$, have been found to act as effective co-stabilizers when added to select metal-containing stabilizers. The use of alkaline-earth metal phosphates are shown in some of the following examples to exhibit desired results.

Differential scanning colorimetry (DSC) measures enthalpy change as a function of temperature due to change of state, chemical composition or molecular activity. The endotherms exhibited by anhydrous disodium monohydrogen phosphate vary depending on the starting material and mode of drying. Temperatures to which a polyvinyl chloride formulation, or the like, can run are approximately 210 °C under shear. The alkali-metal monohydrogen phosphates which have transition temperatures above the polymer processing temperatures act as extremely efficient co-stabilizers.

For many applications, a slight degree of discoloration may still exist, and such can be treated by the addition of a minor amount of a color additive which acts to boost and maintain color control in the system.

Various color-control additives, such as alphaphenyl indole, dihydropyridine, benzoyl stearyl methane, thiodiglycol-bis-beta-aminocrotonate, hydrotalcite (magnesium aluminum hydroxy carbonate), mercaptans, mercaptoesters, or thioborate, are suitable to promote good color along with the synergistic co-stabilizer compound.

Color-control additives, in general, are well known and are described as a booster for sulfur or mercaptancontaining stabilizer compounds in numerous U.S. patents.

Additionally, organic thioanhydrides have been successfully used as color-control additives. Terpenes may also be used as color-control additives.

## EXAMPLES

The following Examples demonstrate preferred embodiments of the invention and should not be interpreted as limiting the scope thereof. All parts and percentages are by weight, unless otherwise specified.

### Processing Method

The following examples were prepared by processing the vinyl halide stabilized polymer utilizing a high-intensity blender, specifically a Henschell, as follows:

1. Charge the vinyl halide polymer resin to the blender.
2. As soon as possible after starting mixing, add stabilizer to blender.
3. Allow temperature to rise to 65° C.
4. Add lubricants, waxes, fillers. Allow temperature to rise to 100° C.
5. At 100° C, add $TiO_2$ (if called for in the formulation) and allow 30 seconds to mix.
6. Dump batch to stirred cooler and allow to come to room temperature.

In the following examples, the basic procedure for utilizing a melt-rheometer device, such as a Brabender, for the measurement of stability time, is as follows:

1. Clean and preheat the melt rheometer to predetermined test temperature (typically 190-210°C), and set rotor speed (typically 60 RPM).
2. Add 62.0 grams of test PVC powder blend through the powder charging chute; install the charging piston and weight to force powder into the rotors and facilitate fluxing (melting).
3. When torque curve indicates fluxing is complete, remove charging chute, piston and weight and replace with "floating" weight.
4. If called for, at 1 minute increase rotor speed (typically to 120 RPM).
5. Allow batch to mix until there is a clear upward change in the direction of the torque curve (at least 250 meter-grams).
6. Stop rotors, disassemble mixing head, remove hot batch from chamber, and commence clean-up procedure to prepare for next batch.

### EXAMPLE 1

A thermoplastic composition comprising the following constituents was prepared:

| Component | Parts |
|---|---|
| Polyvinyl chloride polymer | 100.0 |
| Complex esters of fatty acids (lubricant) | 1.2 |
| Calcium stearate (lubricant) | 0.5 |
| Titanium dioxide (pigment) | 1.0 |
| Calcium carbonate (filler) | 4.0 |

has added thereto the following stabilizers and/or co-stabilizers:

| Run | Stabilizer |
|---|---|
| A.* | 1.05 parts BT1 |
| B.* | 1.2 parts T2 |
| C. | 0.83 parts DSP + 1.2 parts T2 |
| D.* | 1.3 parts T3 |
| E. | 0.83 parts DSP + 1.3 parts T3 |
| F.* | 0.60 parts T4 |
| G. | 0.83 parts DSP + 0.60 parts T4 |
| H.* | 0.81 parts Ester tin |
| I. | 0.83 parts DSP + 0.81 parts Ester tin |

* Comparative

| | |
|---|---|
| DSP = | $Na_2HPO_4$ (anhydrous) |
| BT1 = | 25% Methyltin $(IOMA)_3$ + 75% Dimethyltin $(IOMA)_2$ |
| T2 = | $(C_8H_{17})_2Sn(SCH_2COOC_8H_{17})_2$ |
| T3 = | 73% $(C_8H_{17})_2Sn(SCH_2COOC_8H_{17})_2$ + 27% $(C_8H_{17})Sn(SCH_2COOC_8C_8H_{17})_3$ |
| T4 = | $(C_4H_9)_2Sn(OOCC_{11}H_{23})_2$ |
| Ester tin = | $(C_4H_9OOCCH_2CH_2)_2Sn(SCH_2COOC_8H_{17})_2$ |
| IOMA = | Iso-Octyl Mercapto Acetate |

## RESULTS

Brabender Stability
T = 205°C 60 RPM (1st minute)
increased to 120 RPM (to end)

| Run | Time (minutes) | Improvement (%) |
|---|---|---|
| A.* | 7.2 | --- |
| B.* | 7.2 | --- |
| C. | 10.3 | 43.1 |
| D.* | 7.7 | --- |
| E. | 10.7 | 39.0 |
| F.* | 3.5 | --- |
| G. | 4.0 | 14.3 |
| H* | 6.3 | --- |
| I. | 9.5 | 49.2 |

* comparative

As can be seen from the results of the experiment, the addition of the inorganic phosphate salt in all cases lengthens the term stability of the polymer composition to a significant degree.

In the foregoing experiment it is seen that Run A represents the stabilization achieved by a methyltin stabilizer; Runs B and D show that the same effect can be achieved by 20% more of a dioctyltin stabilizer and by 30% more of a mixed mono- and dioctyltin stabilizer. From the improvements in performance shown by Runs C and E, it is clear that with DSP, one can reduce the amount of octyltin stabilizer needed to achieve performance equivalent to a methyltin stabilizer.

EXAMPLE 2

A thermoplastic composition comprising the following constituents was prepared:

| Component | Parts |
|---|---|
| Polyvinyl chloride polymer | 100.0 |
| Impact modifier | 5.0 |
| Processing aid | 1.0 |
| Lubricant (2 types) | 0.63 |
| Stearamide wax | 0.75 |

has added thereto the following stabilizers and/or co-stabilizers:

| Run | Stabilizer |
|---|---|
| A.* | 2.5 parts T5 |
| B. | 2.5 parts T5 + 1.0 parts $Na_2HPO_4$ |
| C.* | 2.5 parts T6 |
| D. | 2.5 parts T6 + 1.0 parts $Na_2HPO_4$ |
| E.* | 2.5 parts T4 |
| F. | 2.5 parts T4 + 1.0 parts $Na_2HPO_4$ |

* comparative

T5 = dibutyltin $(IOMA)_2$
T6 = 60.8% dibutyltin bis (stearylmaleate)
36.3% dibutyltin maleate
2.9% anti-oxidant
T4 = dibutyltin dilaurate

RESULTS

Brabender Stability
T = 190°C 75 RPM

| Run | Time (minutes) | Improvement (%) |
|---|---|---|
| A.* | 13.2 | --- |
| B. | 17.8 | 34.8 |
| C* | 11.6 | --- |
| D. | 17.4 | 50.0 |
| E.* | 5.9 | --- |
| F. | 10.8 | 83.1 |

* comparative

As can be seen from the results of the experiment, the addition of the inorganic phosphate salt in all cases lengthens by a significant degree the term stability of the polymer composition. The surface area of the DSP used in Example 2 was 1.29 $m^2/g$. Runs A and B of this example illustrate the improvement in performance of dibutyltin bis-IOMA that can be achieved with DSP; Runs C and D, and E and F illustrate the improvement that DSP affords organotin stabilizers that do not contain sulfur.

EXAMPLE 3

A thermoplastic composition comprising the following constituents was prepared:

| Component | Parts |
|---|---|
| Polyvinyl chloride polymer | 100.0 |
| Impact modifier | 5.0 |
| Paraffin wax | 0.8 |
| Processing aid | 1.0 |
| Lubricant | 2.0 |
| Titanium dioxide (pigment) | 12.0 |

has added thereto the following stabilizers and/or co-stabilizers:

| Run | Stabilizer |
|---|---|
| A.* | 2.5 parts T6 |
| B. | 2.5 parts T6 + 1.0 parts $Na_2HPO_4$ (S.A. = 1.74 $m^2/g$) |
| C.* | 2.5 parts T4 |
| D. | 2.5 parts T4 + 1.0 parts $Na_2HPO_4$ (S.A. = 1.29 $m^2/g$) |

* comparative

T6 = 60.8% dibutyltin bis (stearylmaleate) +
36.3% dibutyltin maleate +
2.9% anti-oxidant

T4 = dibutyltin dilaurate

RESULTS

Brabender Stability
T = 190°C 75 RPM

| Run | Time (minutes) | Improvement (%) |
|---|---|---|
| A.* | 12.9 | --- |
| B. | 16.0 | 24.0 |
| C.* | 14.6 | --- |
| D. | 20.6 | 47.6 |

* comparative

As can be seen from the results of the experiment, the addition of the inorganic phosphate salt in all cases lengthens the term stability of the polymer composition to a significant degree.

EXAMPLE 4

A thermoplastic composition comprising the following constituents was prepared:

| Component | Parts |
|---|---|
| Polyvinyl chloride polymer | 100.0 |
| Titanium dioxide (pigment) | 12.0 |
| Impact modifier | 5.0 |
| Paraffin wax | 0.8 |
| Processing aid | 1.0 |
| Calcium stearate | 2.0 |
| Thioextender (thioborate) | 0.1 |

has added thereto the following stabilizers and/or co-stabilizers:

| Run | Stabilizer |
|---|---|
| A.* | 0.8 parts T2 |
| B. | 0.8 parts T2 + 0.8 parts $Na_2HPO_4$ |
| C.* | 1.0 parts T7 |
| D. | 1.0 parts T7 + 0.8 parts $Na_2HPO_4$ |

* comparative

T2 = dioctyltin bis(IOMA)

T7 = 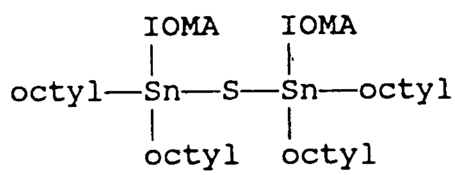

RESULTS

Brabender Stability
T = 190°C 75 RPM

| Run | Time (minutes) | Improvement (%) |
|---|---|---|
| A* | 11.3 | --- |
| B. | 13.7 | 21.1 |
| C.* | 14.1 | --- |
| D. | 18.4 | 30.5 |

* comparative

As can be seen from the results of the experiment, the addition of the inorganic phosphate salt in all cases lengthens the term stability of the polymer composition to a significant degree. The B.E.T.-measured surface area for the $Na_2HPO_4$ used in Example 4 was 1.76 $m^2/g$.

EXAMPLE 5

A further novel phenomenon which has been discovered is a direct correlation between the surface area of the co-stabilizer and the enhancement of the melt-stability time of the stabilized polymer.

Disodium monohydrogen phosphate (anhydrous) with low surface area (below 0.5 $m^2/g$) does not exhibit synergistic behavior with tin mercaptides. However, it has been found that the surface area of the phosphate can be increased to an effective level by hydration and subsequent dehydration.

Forty grams of disodium monohydrogen phosphate (B.E.T. surface area = 0.47 $m^2/g$) was slurried with 66.6 ml $H_2O$ to form a 60% solution of disodium monohydrogen phosphate in water. The slurry was rapidly stirred for 20 minutes and subsequently stripped of water by roto evaporation. The conditions for $H_2O$ removal were:

(I) at 25°C and 25 torr for 40 minutes

(II) temperature raised to 71°C and 25 torr for 240 minutes

The contents of the flask were tumbled very slowly during the drying operation. The resulting $Na_2HPO_4$ had a surface area of 2.2 $m^2/g$.

Performance evaluation of this phosphate was completed in the following formulation:

| Component | Parts |
|---|---|
| Polyvinyl chloride polymer | 100.0 |
| Esters of fatty acids | 1.5 |
| Calcium stearate | 0.3 |
| Titanium dioxide | 1.0 |
| Calcium carbonate | 3.0 |

The test was conducted under the following Brabender rheometer conditions:

T = 205°C, 60 RPM (1st minute), increased to 120 RPM (to end)

| Run | Stabilizers |
|---|---|
| A* | 0.7 organotin (alone) |
| B* | 0.7 organotin + 0.8 $Na_2HPO_4$ (before hydration/dehydration) S.A. = 0.47$m^2/g$ |
| C | 0.7 organotin + 0.8 $Na_2HPO_4$ (after hydration/dehydration) S.A. = 2.2$m^2/g$ |

(* comparative)

| RESULTS | | |
|---|---|---|
| Run | Time (minutes) | Improvement (%) |
| A.* | 8.8 | --- |
| B.* | 9.3 | 5.7 |
| C. | 14.3 | 62.5 |

(* Comparative)

As a result, one can see that the synergistic stabilizer of the present invention, having high surface areas, whether present initially or created through hydration/dehydration, exhibit outstanding results.

EXAMPLE 6

A thermoplastic composition comprising the following constituents was prepared:

| Component | Parts |
|---|---|
| Polyvinyl chloride polymer | 100.0 |
| Complex esters of fatty acids (lubricant) | 1.2 |
| Calcium stearate (lubricant) | 0.5 |
| Titanium dioxide (pigment) | 1.0 |
| Calcium carbonate (filler) | 4.0 |

In this example, the rigid vinyl chloride polymer employed is sold under the trademark "GEON 86". The thermoplastic composition has added thereto a synergistic co-stabilizer composition comprising the following constituents:

| Run | Stabilizer |
|---|---|
| A.* | 1.0 part STABILIZER A |
| B. | 1.3 parts $K_2HPO_4$ + 1.0 part STABILIZER A |

(* comparative)

STABILIZER A = [80% BT2 + 20% solvent]
BT2 = [67% $Bu_2Sn(IOMA)_2$ + 27% $(BuSnS)_2S$ + 6% Mineral Oil]

RESULTS

Brabender Stability
T = 205°C 60 RPM (1st minute)
increased to 120 RPM (to end)

| Run | Time (minutes) | Improvement (%) |
|---|---|---|
| A.* | 8.9 | --- |
| B. | 14.3 | 60.7 |

(*comparative)

As can be seen from the results of the experiment, the addition of the inorganic phosphate salt lengthens to a significant degree the term stability of the polymer composition. It is also observed that dipotassium hydrogen phosphate is particularly efficient in this regard.

EXAMPLE 7

A thermoplastic composition comprising the following constituents was prepared:

| Component | Parts |
|---|---|
| Polyvinyl chloride polymer | 100.0 |
| Complex esters of fatty acids (lubricant) | 1.2 |
| Calcium stearate (lubricant) | 0.5 |
| Titanium dioxide (pigment) | 1.0 |
| Calcium carbonate (filler) | 4.0 |

In this example, the rigid vinyl chloride polymer employed is sold under the trademark "GEON 86". The thermoplastic composition has added thereto a synergistic co-stabilizer composition comprising the following constituents:

| Run | Stabilizer |
|---|---|
| A.* | 1.0 part STABILIZER A |
| B. | 0.38 parts $LiH_2PO_4$ + 1.0 part STABILIZER A |
| C. | 0.69 parts $Mg(H_2PO_4)_2$ + 1.0 part STABILIZER A |

* comparative

STABILIZER A = [80% BT2 + 20% solvent]
BT2 = [67% $Bu_2Sn(IOMA)_2$ + 27% $(BuSnS)_2S$ + 6% Mineral Oil]

RESULTS

Brabender Stability
T = 205°C 60 RPM (1st minute)
increased to 120 RPM (to end)

| Run | Time (minutes) | Improvement (%) |
|---|---|---|
| A.* | 10.2 | --- |
| B. | 14.2 | 39.2 |
| C. | 11.3 | 8.8 |

* comparative

As can be seen from the results of the experiment, the addition of the inorganic phosphate salt in all cases lengthens to a significant degree the term stability of the polymer composition. The effect of the lithium salt is particularly noteworthy.

EXAMPLE 8

A thermoplastic composition comprising the following constituents was prepared:

| Component | Parts | |
|---|---|---|
| Polyvinyl chloride polymer | 100.0 | |
| Impact modifier | 10.0 | |
| Processing aid | 1.0 | |
| Lubricant (2 types) | 1.5 | |
| Toner (pigment) | 0.05 | |
| Calcium stearate | 0.3 ) | |
| Zinc stearate | 0.2 ) | Stabilizer |
| Epoxidized soybean oil | 3.0 ) | |

Each of the runs described below were done using the above formulation, while varying the particular color-control additive, with and without 0.83 parts $Na_2HPO_4$ (anhydrous DSP).

| Run | Color Additive | Minutes | | Improvement (%) |
|---|---|---|---|---|
| | | No DSP | With DSP | |
| 1 | DLAD | 3.8 | 6.5 | 71.1 |
| 2 | Benzoyl stearoyl methane | 6.5 | 15.6 | 140.0 |
| 3 | Alpha-Phenyl indole | 6.6 | 12.0 | 81.8 |
| 4 | Thiodiglycol-bis-beta-aminocrotonate | 5.0 | 9.5 | 90.0 |
| 5 | Alcamizer | 8.8 | 12.0 | 36.4 |
| 6 | -None- | 3.5 | 5.7 | 62.8 |

DLAD = 2,6-Dimethyl-3,5-Lauryl Acetate-Dihydropyridine
Alcamizer = hydrotalcite

Runs 1-4 included 0.15 PHR of color-control additive, and Run 5 included 0.3 PHR.

As can be seen from the results of the experiment, the addition of the inorganic phosphate salt in all cases lengthens to a significant degree the term stability of the polymer composition, containing metal soaps as the primary stabilizers. What is also seen is that stabilizing systems based on metal soaps with DSP display stability times that are comparable to those obtained with tin-containing stabilizers.

## EXAMPLE 9

Tin tetramercaptides with inorganic phosphates can be used as thermal stabilizers for vinyl chloride polymer compositions.

The use of tin tetramercaptides as thermal stabilizers in PVC has resulted in catastrophic degradation of the polymer due to rapid formation of tin chloride prodegradants. It has been found that certain alkali-metal phosphate salts can dramatically improve stability of tin tetramercaptide stabilized polyvinyl chloride. Further enhancement to color and term stability can be achieved by the use of a color-control additive. Certain dibasic phosphate salts, when added to the vinyl chloride polymer formulations containing tin tetramercaptides as primary stabilizer, showed surprising improvements to color and process stability. Such phosphate salts include anhydrous $Na_2HPO_4$ and $K_2HPO_4$. The results were unexpected, as neither the tin tetramercaptide nor the alkali-metal phosphate salts themselves showed any stabilizing properties. Results are summarized in Table II below. The following formulation is used in this example:

| Component | Parts |
|---|---|
| PVC (GEON 103 EP) | 100 |
| $TiO_2$ | 12 |
| D-200* | 5 |
| Process Aid** | 0.3 |
| Ca Stearate | 2 |
| Paraffin Wax | 1.0 |

* An impact modifier sold by M&T Chemicals Inc. under the trademark Durastrength D-200
** A processing aid sold by Metco America Inc. under the trademark Metablen P-551.

Each run has added thereto a stabilizer or co-stabilizer of the following compositions:

Table II describes the improvement to color by the dibasic metal phosphate. Samples are withdrawn from the Brabender rheometer at 2-minute time intervals. The colors are compared visually and rated according to the following abbreviations:

| Color | Degree |
|---|---|
| W - white<br>Y - yellow<br>G - gray | L - light<br>P - pale<br>D - dark |

TABLE II

| RUN | Parts | Stabilizer | Time (mins) 4 | 8 | 12 | 16 | 20 | 24 |
|---|---|---|---|---|---|---|---|---|
| 1* | --- | None | DY | G | | | | |
| 2* | 1.9 | $Sn(IOMA)_4$ | G | | | | | |
| 3 | 1.9<br>2.0 | $Sn(IOMA)_4$<br>$K_2HPO_4$ | W | W | DY | G | | |

(* comparative)

The results demonstrate the unexpected synergistic effect resulting from the combination of tin tetramercaptides and alkali-metal phosphate salts. Further improvement is achieved by the addition of color-control additives (such as mercapto ethyl tallate or IOMA). The prior art does not teach any combination of tin tetramercaptide and an alkali-metal phosphate. The results, again, show significant improvement in the overall term stability.

EXAMPLE 10

A thermoplastic composition comprising the following constituents was prepared:

| Component | Parts |
|---|---|
| Polyvinyl chloride polymer | 100.0 |
| Titanium dioxide (pigment) | 12.0 |
| Impact modifier | 5.0 |
| Paraffin wax | 0.8 |
| Processing aid | 1.0 |
| Calcium stearate | 2.0 |
| Thioextender (thioborate) (color control add.) | 0.1 |

has added thereto the following stabilizers and/or co-stabilizers:

| Run | Stabilizer |
|---|---|
| A.* | 1.2 parts $Sn(IOMA)_4$ |
| B. | 1.2 parts $Sn(IOMA)_4$ + 0.8 parts $Na_2HPO_4$ |
| C.* | 0.9 parts $Sn(IOMA)_4$ |
| D. | 0.9 parts $Sn(IOMA)_4$ + 0.8 parts $Na_2HPO_4$ |

(* comparative)

RESULTS

Brabender Stability
T = 190°C 75 RPM

| Run | Time (minutes) | Improvement (%) |
|---|---|---|
| A.* | 5.3 | --- |
| B. | 9.4 | 77.4 |
| C.* | 4.2 | --- |
| D. | 7.8 | 85.7 |

As can be seen from the results of the experiment, the addition of the inorganic phosphate salt in all cases lengthens the term stability of the polymer composition to a significant degree. The surface area for the $Na_2HPO_4$ used in Example 12 was 1.76 $m^2/g$.

EXAMPLE 11

The synergistic effect of disodium hydrogen phosphate is seen when tin chlorides are included in the stabilizer mixture, as the examples below indicate.

The formulation used was:

| Component | Parts |
|---|---|
| Polyvinyl chloride polymer | 100 |
| Titanium dioxide (pigment) | 12 |
| Impact modifier | 5 |
| Processing aid | 1 |
| Calcium stearate | 2 |
| Paraffin wax | 0.2 |
| Stabilizer | X |

| 1. | Stabilizer | Parts | %Sn in Stabilizer | Melt Stability Time |
|---|---|---|---|---|
| a.* | BuSn (S) IOMA | O.46 | 13 | 14.8 |
| b. | BuSn (S) IOMA<br>+ $Na_2HPO_4$ | 0.46<br>0.8 | 13 | 20.8 |
| c* | BuSn (S) IOMA<br>$BuSnCl_3$ | 0.41<br>0.03 | 12<br>1 | 14.6 |
| d. | BuSn (S) IOMA<br>+ $BuSnCl_3$<br>+ $Na_2HPO_4$ | 0.41<br>0.03<br>0.8 | 12<br>1 | 20.8 |
| 2. | | | | |
| a.* | $SnCl(IOMA)_3$ | 1.6 | 24 | 2.9 |
| b. | $SnCl(IOMA)_3$<br>+ $Na_2HPO_4$ | 1.6<br>2.0 | 24 | 14.2 |

(*comparative)

The results, as can be seen from the above Examples, show improved stabilization of the vinyl resin compound. The utilization of the alkali-metal phosphate, such as the disodium hydrogen phosphate, allows for a synergistic effect in the overall stabilization properties of the stabilizer composition. In addition, the replacement of the metal by the inorganic phosphate yields economic savings to the user. It is contemplated that such inorganic additive can be utilized in all conceivable metal stabilizing compositions.

The overall stabilizer composition combining metal-containing compounds and alkali-metal or alkaline-earth metal phosphates can be utilized to stabilize numerous resin components.

**Claims**

**1.** A stabilizer composition for enhancing the long-term melt stability of halogen-containing thermoplastic polymer compositions, the stabilizer composition comprising:

a) one or more metal-containing primary stabilizer compounds; and

b) a finely divided co-stabilizing phosphate material comprising an anhydrous sodium or potassium monohydrogen phosphate, lithium dihydrogen phosphate, or alkali-metal pyrophosphate, the finely divided phosphate material being characterized by a B.E.T.-measured specific surface area of at least 0.5 $m^2/g$.

**2.** A stabilizer composition as claimed in Claim 1, comprising 5 to 95 percent by weight of said primary stabilizer compounds and 5 to 95 percent by weight of said co-stabilizing phosphate material.

**3.** A stabilizer composition as claimed in Claim 1 or 2, wherein said phosphate material is anhydrous $Na_2HPO_4$.

**4.** A stabilizer composition as claimed in any of Claims 1 to 3, wherein said B.E.T.-measured specific surface area is at least 1.1 $m^2/g$.

**5.** A stabilizer composition as claimed in any of Claims 1 to 4, wherein the metal component of said metal-containing primary stabilizer compounds is one or more of lithium, sodium, potassium, magnesium, calcium, zinc, strontium, cadmium, barium, manganese, iron, cobalt, titanium, aluminum, tin, lead, bismuth or antimony.

**6.** A stabilizer composition as claimed in any of Claims 1 to 4, wherein said metal-containing stabilizer comprises an organotin compound containing one or more tetravalent tin atoms which each have at least one direct tin-to-carbon bond.

**7.** A stabilizer composition as claimed in Claim 6, wherein each tetravalent tin atom of said organotin compound has at least one direct tin-to-sulfur or tin-to-oxygen bond.

8. A stabilizer composition as claimed in Claim 7, wherein the organotin compound comprises an organotin oxide, sulfide, alkoxide carboxylate, mercaptide, derivative of a mercaptide, derivative of a mercaptoalcohol, derivative of a mercaptoacid ester or derivative of a mercaptoalcohol ester.

9. A stabilizer composition as claimed in Claim 7, wherein said organotin compound is a methyltin mercaptide, butyltin mercaptide, octyltin mercaptide, ester tin mercaptide, or non-alkylated tin mercaptide.

10. A stabilizer composition as claimed in Claim 7, wherein said organotin compound is a sulfur-bridged tin mercaptide, oxygen-bridged tin mercaptide, or halogen-containing sulfur or oxygen-bridged tin mercaptide.

11. A stabilizer composition as claimed in Claim 7, wherein said organotin compound is a tin carboxylate, tin maleate, or tin alkoxide.

12. A stabilizer composition as claimed in any of Claims 1 to 4, wherein said metal-containing stabilizer comprises a tin compound containing one or more tetravalent tin atoms which each have at least one direct tin-to-sulfur or tin-to-oxygen bond.

13. A stabilizer composition as claimed in Claim 12, wherein said tin compound is a tin tetramercaptide.

14. A stabilizer composition as claimed in any of Claims 1 to 4 wherein said metal-containing primary stabilizer comprises a tin chloride or a tin chloride/tin mercaptide combination.

15. A stabilizer composition as claimed in any of Claims 1 to 14 in which said metal-containing primary stabilizer compounds and said finely divided anhydrous co-stabilizing phosphate material are mixed together in the form of a free-flowing powder.

16. A stabilizer composition as claimed in any of Claims 1 to 14 in which said metal-containing primary stabilizer compounds and said finely divided co-stabilizing phosphate material are provided separately, said phosphate material being in the form of a free-flowing powder.

17. A stabilizer composition as claimed in Claim 16, in which the primary stabilizer compounds are provided in liquid form.

18. A halogen-containing thermoplastic polymer composition comprising a halogen-containing thermoplastic polymer and a stabilizer composition as set forth in any of claims 1 to 17.

19. A halogen-containing thermoplastic polymer composition as claimed in Claim 18, comprising 0.1 to 10 parts by weight of said stabilizer composition per 100 parts of said polymer.

20. A halogen-containing thermoplastic polymer composition as claimed in Claim 18 or 19, further comprising a color-control additive.

21. A halogen-containing thermoplastic polymer composition as claimed in Claim 20, wherein said color-control additive is alpha-phenyl indole, dihydropyridine, benzoyl stearyl methane, thiodiglycol-bis-beta-aminocrotonate, hydrotalcite, a mercaptan, a mercaptoester, or thioborate.

22. A halogen-containing thermoplastic polymer composition as claimed in any of Claims 18 to 21, further comprising one or more of a lubricant, a filler material, a pigment material, or an impact modifier.

23. An article fabricated from a halogenated vinyl polymer composition as claimed in any of claims 18 to 22.

24. An article as claimed in Claim 23 wherein said article is a pipe, a bottle, a siding material, a window profile, or a sheet or film.

**25.** A process for stabilizing a halogen-containing thermoplastic polymer composition against the effects of heat, said process comprising intermixing said polymer composition with a stabilizer composition as set forth in any of claims 1 to 17 prior to heating said polymer composition.

**26.** A process for stabilizing a halogen-containing thermoplastic polymer composition as claimed in Claim 25 wherein 0.1 to 10 parts by weight of said stabilizer composition are intermixed per 100 parts of polymer in said polymer composition.

**27.** In a process for stabilizing a halogen-containing thermoplastic composition against the effects of heat, the improvement characterized by:
incorporating into said polymer composition:
a) one or more metal-containing compounds; and
b) a finely divided co-stabilizing phosphate material comprising an anhydrous sodium or potassium monohydrogen phosphate, lithium dihydrogen phosphate, or alkali-metal pyrophosphate, the finely divided phosphate material being characterized by a B.E.T.-measured specific surface area of at least 0.5 $m^2/g$.

**28.** A stabilizer composition for enhancing the long-term melt stability of halogen-containing thermoplastic polymer compositions, the stabilizer composition comprising:
a) one or more metal-containing primary stabilizer compounds; and
b) a finely divided anhydrous co-stabilizing alkaline-earth metal phosphate or material, the finely divided phosphate material being characterized by a B.E.T.-measured specific surface area of at least 0.5 $m^2/g$.

## Patentansprüche

**1.** Stabilisatorzusammensetzung für die Steigerung der Langzeitschmelzstabilität Halogen-enthaltender thermoplastischer Polymerzusammensetzungen, wobei die Stabilisatorzusammensetzung
a) eine oder mehrere Metalle enthaltende primäre Stabilisatorverbindungen; und
b) feinverteiltes co-stabilisierendes Phosphatmaterial, welches wasserfreies Natrium- oder Kaliummonohydrogenphosphat, Lithiumdihydrogenphosphat oder Alkalimetallpyrophosphat umfaßt, wobei das feinverteilte Phosphatmaterial durch eine B.E.T.-gemessene spezifische Oberfläche von mindestens 0,5 $m^2/g$ charakterisiert ist, enthält.

**2.** Stabilisatorzusammensetzung nach Anspruch 1, dadurch **gekennzeichnet,** daß sie 5 bis 95 Gew.-% der primären Stabilisatorverbindungen und 5 bis 95 Gew.-% des co-stabilisierenden Phosphatmaterials enthält.

**3.** Stabilisatorzusammensetzung nach Anspruch 1 oder 2, dadurch **gekennzeichnet,** daß das Phosphatmaterial wasserfreies $Na_2HPO_4$ ist.

**4.** Stabilisatorzusammensetzung nach einem der Ansprüche 1 bis 3, dadurch **gekennzeichnet,** daß die B.E.T.-gemessene spezifische Oberfläche mindestens 1,1 $m^2/g$ beträgt.

**5.** Stabilisatorzusammensetzung nach einem der Ansprüche 1 bis 4, dadurch **gekennzeichnet,** daß die Metallkomponente der genannten Metall-enthaltenden primären Stabilisatorverbindungen eine oder mehrere ist, ausgewählt aus Lithium, Natrium, Kalium, Magnesium, Calcium, Zink, Strontium, Cadmium, Barium, Mangan, Eisen, Cobalt, Titan, Aluminium, Zinn, Blei, Wismuth oder Antimon.

**6.** Stabilisatorzusammensetzung nach einem der Ansprüche 1 bis 4, dadurch **gekennzeichnet,** daß der Metall-enthaltende Stabilisator eine organische Zinnverbindung, die eine oder mehrere vierwertige Zinnatome enthält, welche je mindestens eine direkte Zinn-an-Kohlenstoff-Bindung aufweisen, umfaßt.

**7.** Stabilisatorzusammensetzung nach Anspruch 6, dadurch **gekennzeichnet,** daß jedes vierwertige Zinnatom der genannten organischen Zinnverbindung mindestens eine direkte Zinn-an-Schwefel- oder Zinn-an-Sauerstoff-Bindung aufweist.

**8.** Stabilisatorzusammensetzung nach Anspruch 7, dadurch **gekennzeichnet,** daß die organische Zinnverbindung ein organisches Zinnoxid, -sulfid, -alkoxid, -carboxylat, -mercaptid, Derivat eines Mercaptids, Derivat eines Mercaptoalkohols, Derivat eines Mercaptosäureesters oder Derivat eines Mercaptoalkoholesters enthält.

**9.** Stabilisatorzusammensetzung nach Anspruch 7, dadurch **gekennzeichnet,** daß die organische Zinnverbindung ein Methylzinnmercaptid, ein Butylzinnmercaptid, ein Octylzinnmercaptid, der Ester eines Zinnmercaptids oder ein nicht-alkyliertes Zinnmercaptid ist.

**10.** Stabilisatorzusammensetzung nach Anspruch 7, dadurch **gekennzeichnet,** daß die organische Zinnverbindung ein schwefelüberbrücktes Zinnmercaptid, sauerstoffüberbrücktes Zinnmercaptid oder Halogen-enthaltendes schwefel- oder sauerstoffüberbrücktes Zinnmercaptid ist.

**11.** Stabilisatorzusammensetzung nach Anspruch 7, dadurch **gekennzeichnet,** daß die organische Zinnverbindung Zinncarboxylat, Zinnmaleat oder Zinnalkoxid ist.

**12.** Stabilisatorzusammensetzung nach einem der Ansprüche 1 bis 4, dadurch **gekennzeichnet,** daß der Metall-enthaltende Stabilisator eine Zinnverbindung enthält, welche ein oder mehrere vierwertige Zinnatome enthält, die je mindestens eine direkte Zinn-an-Schwefel- oder Zinn-an-Sauerstoff-Bindung besitzt.

**13.** Stabilisatorzusammensetzung nach Anspruch 12, dadurch **gekennzeichnet,** daß die Zinnverbindung Zinntetramercaptid ist.

**14.** Stabilisatorzusammensetzung nach einem der Ansprüche 1 bis 4, dadurch **gekennzeichnet,** daß der Metall-enthaltende primäre Stabilisator ein Zinnchlorid oder ein Zinnchlorid/Zinnmercaptidgemisch umfaßt.

**15.** Stabilisatorzusammensetzung nach einem der Ansprüche 1 bis 14, dadurch **gekennzeichnet,** daß die Metall-enthaltenden primären Stabilisatorverbindungen und das feinverteilte wasserfreie co-stabilisierende Phosphatmaterial zusammen in Form eines freifließenden Pulvers vermischt sind.

**16.** Stabilisatorzusammensetzung nach einem der Ansprüche 1 bis 14, dadurch **gekennzeichnet,** daß die Metall-enthaltenden primären Stabilisatorverbindungen und das feinverteilte co-stabilisierende Phosphatmaterial getrennt vorgesehen sind und daß das Phosphatmaterial in Form eines freifließenden Pulvers vorliegt.

**17.** Stabilisatorzusammensetzung nach Anspruch 16, dadurch **gekennzeichnet,** daß die primären Stabilisatorverbindungen in flüssiger Form vorliegen.

**18.** Halogen-enthaltende thermoplastische Polymerzusammensetzung, die ein Halogen-enthaltendes thermoplastisches Polymeres und eine Stabilisatorzusammensetzung, wie sie in irgendeinem der Ansprüche 1 bis 17 angegeben ist, enthält.

**19.** Halogen-enthaltende thermoplastische Polymerzusammensetzung nach Anspruch 18, dadurch **gekennzeichnet,** daß sie 0,1 bis 10 Gew.-Teile der genannten Stabilisatorzusammensetzung pro 100 Teile des Polymeren enthält.

**20.** Halogen-enthaltende thermoplastische Polymerzusammensetzung nach einem der Ansprüche 18 oder 19, dadurch **gekennzeichnet,** daß sie zusätzlich einen Zusatzstoff für die Farbkontrolle enthält.

**21.** Halogen-enthaltende thermoplastische Polymerzusammensetzung nach Anspruch 20, dadurch **gekennzeichnet,** daß der Zusatzstoff für die Farbkontrolle alpha-Phenylindol, Dihydropyridin, Benzoylstearylmethan, Thiodiglykol-bis-beta-aminocrotonat, Hydrotalcit, Mercaptan, Mercaptoester oder Thioborat ist.

**22.** Halogen-enthaltende thermoplastische Polymerzusammensetzung nach einem der Ansprüche 18 bis 21, dadurch **gekennzeichnet,** daß sie zusätzlich eine oder mehrere Stoffe aus der Gruppe Schmiermittel, Füllstoffmaterial, Pigmentmaterial oder Stoßmodifizierungsmaterial enthält.

23. Gegenstand hergestellt aus einer halogenierten Vinylpolymerzusammensetzung nach einem der Ansprüche 18 bis 22.

24. Gegenstand nach Anspruch 23, dadurch **gekennzeichnet,** daß der Gegenstand ein Rohr, eine Flasche, ein Verkleidungsmaterial, ein Fensterprofil, oder eine Platte, eine Folie oder ein Film ist.

25. Verfahren zur Stabilisierung einer Halogen-enthaltenden thermoplastischen Polymerzusammensetzung gegen die Wirkungen von Wärme, dadurch **gekennzeichnet,** daß die Polymerzusammensetzung mit einer Stabilisatorzusammensetzung nach einem der Ansprüche 1 bis 17 vor dem Erhitzen der Polymerzusammensetzung vermischt wird.

26. Verfahren zur Stabilisierung einer Halogen-enthaltenden thermoplastischen Polymerzusammensetzung nach Anspruch 25, dadurch **gekennzeichnet,** daß 0,1 bis 10 Gew.-Teile der Stabilisatorzusammensetzung pro 100 Gew.-Teile Polymere in der Polymerzusammensetzung vermischt werden.

27. Verfahren zur Stabilisierung einer Halogen-enthaltenden thermoplastischen Zusammensetzung gegenüber den Einwirkungen von Wärme, dadurch **gekennzeichnet,** daß in die Polymerzusammensetzung:
   a) eine oder mehrere Metalle enthaltende Verbindungen; und
   b) feinverteiltes co-stabilisierendes Phosphatmaterial, welches wasserfreies Natrium- oder Kaliummonohydrogenphosphat, Lithiumdihydrogenphosphat oder Alkalimetallpyrophosphat umfaßt, wobei das feinverteilte Phosphatmaterial durch eine B.E.T.-gemessene spezifische Oberfläche von mindestens 0,5 $m^2/g$ charakterisiert ist,
   eingearbeitet werden.

28. Stabilisatorzusammensetzung für die Steigerung der Langzeitschmelzstabilität Halogen-enthaltender thermoplastischer Polymerzusammensetzungen, wobei die Stabilisatorzusammensetzung
   a) eine oder mehrere Metall-enthaltende primäre Stabilisatorverbindungen; und
   b) feinverteiltes wasserfreies co-stabilisierendes Erdalkalimetallphosphat oder -material enthält, wobei das feinverteilte Phosphatmaterial durch eine B.E.T.-gemessene spezifische Oberfläche von mindestens 0,5 $m^2/g$ charakterisiert ist.

**Revendications**

1. Composition de stabilisant destinée à accroître la stabilité en masse fondue à long terme de compositions de polymères thermoplastiques contenant un halogène, la composition de stabilisant comprenant :
   a) un ou plusieurs composés stabilisants primaires contenant un métal ; et
   b) un phosphate co-stabilisant finement divisé comprenant un monohydrogénophosphate de sodium ou de potassium anhydre, un dihydrogénophosphate de lithium ou un pyrophosphate de métal alcalin, le phosphate finement divisé étant caractérisé par une surface spécifique, mesurée par le procédé B.E.T., d'au moins 0,5 $m^2/g$.

2. Composition de stabilisant suivant la revendication 1, comprenant 5 à 95 % en poids des composés stabilisants primaires et 5 à 95 % en poids du phosphate co-stabilisant.

3. Composition de stabilisant suivant la revendication 1 ou 2, dans laquelle le phosphate consiste en $Na_2HPO_4$ anhydre.

4. Composition de stabilisant suivant l'une quelconque des revendications 1 à 3, dans laquelle la surface spécifique, mesurée par le procédé B.E.T., est au moins égale à 1,1 $m^2/g$.

5. Composition de stabilisant suivant l'une quelconque des revendications 1 à 4, dans laquelle le constituant métallique des stabilisants primaires contenant un métal consiste en un ou plusieurs métaux choisis entre le lithium, le sodium, le potassium, le magnésium, le calcium, le zinc, le strontium, le cadmium, le baryum, le manganèse, le fer, le cobalt, le titane, l'aluminium, l'étain, le plomb, le bismuth et l'antimoine.

6. Composition de stabilisant suivant l'une quelconque des revendications 1 à 4, dans laquelle le composé stabilisant contenant un métal comprend un composé organique d'étain contenant un ou plusieurs atomes d'étain tétravalent qui possèdent chacun au moins une liaison directe étaincarbone.

7. Composition de stabilisant suivant la revendication 6, dans laquelle chaque atome d'étain tétravalent du composé organique d'étain possède au moins une liaison directe étain-soufre ou étain-oxygène.

8. Composition de stabilisant suivant la revendication 7, dans laquelle le composé organique d'étain comprend un oxyde, sulfure, alcoolate, carboxylate, mercaptide, dérivé de mercaptide, dérivé de mercapto-alcool, dérivé d'ester de mercapto-acide ou dérivé d'ester de mercapto-alcool organique d'étain.

9. Composition de stabilisant suivant la revendication 7, dans laquelle le composé organique d'étain est un mercaptide de méthyl-étain, un mercaptide de butyl-étain, un mercaptide d'octyl-étain, un mercaptide d'étain à fonction ester ou un mercaptide d'étain non alkylé.

10. Composition de stabilisant suivant la revendication 7, dans laquelle le composé organique d'étain est un mercaptide d'étain ponté avec le soufre, un mercaptide d'étain ponté avec l'oxygène ou un mercaptide d'étain ponté avec le soufre ou l'oxygène et contenant un halogène.

11. Composition de stabilisant suivant la revendication 7, dans laquelle le composé organique d'étain est un carboxylate d'étain, un maléate d'étain ou un alcoodate d'étain.

12. Composition de stabilisant suivant l'une quelconque des revendications 1 à 4, dans laquelle le stabilisant contenant un métal comprend un composé d'étain contenant un ou plusieurs atomes d'étain tétravalent qui possèdent chacun au moins une liaison directe étain-soufre ou étain-oxygène.

13. Composition de stabilisant suivant la revendication 12, dans laquelle le composé d'étain est un tétramercaptide d'étain.

14. Composition de stabilisant suivant l'une quelconque des revendications 1 à 4, dans laquelle le stabilisant primaire contenant un métal comprend un chlorure d'étain ou une association chlorure d'étain/mercaptide d'étain.

15. Composition de stabilisant suivant l'une quelconque des revendications 1 à 14, dans laquelle les composés stabilisants primaires contenant un métal et le phosphate co-stabilisant anhydre finement divisé sont mélangés les uns aux autres sous forme d'une poudre à écoulement libre.

16. Composition de stabilisant suivant l'une quelconque des revendications 1 à 14, dans laquelle les composés stabilisants primaires contenant un métal et le phosphate co-stabilisant finement divisé sont fournis séparément, ledit phosphate étant sous forme d'une poudre à écoulement libre.

17. Composition de stabilisant suivant la revendication 16, dans laquelle les composés stabilisants primaires sont fournis sous forme liquide.

18. Composition de polymère thermoplastique contenant un halogène, comprenant un polymère thermoplastique contenant un halogène et une composition de stabilisant suivant l'une quelconque des revendications 1 à 17.

19. Composition de polymère thermoplastique contenant un halogène suivant la revendication 18, comprenant 0,1 à 10 parties en poids de la composition de stabilisant pour 100 parties dudit polymère.

20. Composition de polymère thermoplastique contenant un halogène suivant la revendication 18 ou 19, comprenant en outre un additif de réduction de couleur.

21. Composition de polymère thermoplastique contenant un halogène suivant la revendication 20, dans laquelle l'additif de réduction de couleur est l'alphaphényl-indole, la dihydropyridine, le benzoylstéarylméthane, le bis-bêta-amino-crotonate de thiodiglycol, l'hydrotalcite, un mercaptan, un mercaptoester ou un thioborate.

**22.** Composition de polymère thermoplastique contenant un halogène suivant l'une quelconque des revendications 18 à 21, comprenant en outre un ou plusieurs constituants choisis entre un lubrifiant, une charge, un pigment ou un modificateur de résistance au choc.

**23.** Article produit à partir d'une composition de polymère vinylique contenant un halogène suivant l'une quelconque des revendications 18 à 22.

**24.** Article suivant la revendication 23, qui est un conduit, une bouteille, un élément de raccordement, un cadre de fenêtre, une feuille ou un film.

**25.** Procédé pour stabiliser une composition de polymère thermoplastique contenant un halogène vis-à-vis des effets de la chaleur, ledit procédé comprenant le mélange de ladite composition de polymère à une composition de stabilisant suivant l'une quelconque des revendications 1 à 17 avant chauffage de ladite composition de polymère.

**26.** Procédé pour stabiliser une composition de polymère thermoplastique contenant un halogène suivant la revendication 25, dans lequel une quantité de 0,1 à 10 parties en poids de la composition de stabilisant est incorporée pour 100 parties de polymère dans ladite composition de polymère.

**27.** Dans un procédé pour stabiliser une composition thermoplastique contenant un halogène vis-à-vis des effets de la chaleur, perfectionnement caractérisé par :

l'incorporation à ladite composition de polymère :

a) d'un ou plusieurs composés contenant un métal ; et

b) d'un phosphate co-stabilisant finement divisé comprenant un monohydrogénophosphate de sodium ou de potassium anhydre, un dihydrogénophosphate de lithium ou un pyrophosphate de métal alcalin, le phosphate finement divisé étant caractérisé par une surface spécifique, mesurée par le procédé B.E.T., d'au moins 0,5 $m^2$/g.

**28.** Composition de stabilisant destinée à accroître la stabilité en masse fondue à long terme de compositions de polymères thermoplastiques contenant un halogène, la composition de stabilisant comprenant :

a) un ou plusieurs composés stabilisants primaires contenant un métal ; et

b) un phosphate de métal alcalino-terreux costabilisant anhydre finement divisé, le phosphate finement divisé étant caractérisé par une surface spécifique, mesurée par le procédé B.E.T., d'au moins 0,5 $m^2$/g.